# EUROPEAN PATENT APPLICATION

(11) **EP 2 874 399 A1**
(43) Date of publication of application: **20.05.2015**
(21) Application number: 13816121.1
(22) Date of filing: 02.07.2013
(51) Int. Cl.: H04N 21/235, H04N 21/435

(54) **TRANSMISSION DEVICE, INFORMATION PROCESSING METHOD, PROGRAM, RECEPTION DEVICE, AND APPLICATION LINKING SYSTEM**

(30) Priority: 12.07.2012 US 201261670900 P
(71) Applicant: Sony Corporation, Tokyo 108-0075 (JP)
(72) Inventor: YAMAGISHI, Yasuaki, Tokyo 108-0075 (JP)
(74) Representative: Witte, Weller & Partner Patentanwälte mbB
(86) International application number: PCT/JP2013/068148
(87) International publication number: WO 2014/010470

(57) **Abstract**

The present disclosure relates to a transmission device, a method of processing information, a program, a reception device, and an application cooperation system, which enable an interface with respect to a plurality of ACR servers used for discrimination of content to become common when an application is executed in cooperation with progress of arbitrary content now being viewed. A transmission device that is the first aspect of the present disclosure includes one or a plurality of content identification units, and a timeline data generation unit that generates timeline data, and collectively supplies the common timeline data to the one or the plurality of content identification units. The present disclosure is applicable to a broadcasting device of a broadcast station, and the like.

## Description

### TECHNICAL FIELD

The present disclosure relates to a transmission device, a method of processing information, a program, a reception device, and an application cooperation system, especially relates to a transmission device, a method of processing information, a program, a reception device, and an application cooperation system, which are favorable used when an application program is executed in cooperation with progress of content such as a television program.

### BACKGROUND ART

For example, consider displaying, on screens, information (performers, a story line, announcement of the next time, and the like) related to a television (TV) program (hereinafter, simply referred to as program), or information (news, weather forecast, traffic information, and the like) useful for viewers although not directly related to the program, when the program is being viewed.

To realize the above display, a command for acquiring and starting a dedicated application program (hereinafter, described as application in short) may just be transmitted to TV receivers and the like in cooperation with progress of the program. In fact, in Japan and Europe, the command or the application is transmitted using a band for data broadcasting in a TV broadcasting signal, whereby the above display is realized (for example, see Patent Document 1).

Meanwhile, in the United States, the band for data broadcasting is not provided in the TV broadcasting signal, and a method in place thereof has not been established. Therefore, execution of an application in cooperation with progress of a program has not been realized.

Note that, in the United States, there are a larger number of households who views programs through a CATV or an IPTV than the number of households who directly receive TV broadcasting waves with the TV receivers and view the programs. In the CATV or the IPTV, only a video and an audio signal of the program may sometimes be extracted and distributed from the TV broadcasting signal, and thus if the band for data broadcasting is provided in the TV broadcasting signal in the United States, there is no guarantee that the data broadcasting signal including data related to an application is transmitted to reception devices.

Further, in recent years, even when not only a program on the air, but also a recorded program, a video played back from a package media such as a DVD or BD, or arbitrary content such as a moving image downloaded from the Internet is viewed, there are demands for executing an application in cooperation with progress of the program, the video, or the arbitrary content.

### CITATION LIST

### PATENT DOCUMENT

Patent Document 1: Japanese Patent Application Laid-Open No. 2006-50237

### SUMMARY OF THE INVENTION

### PROBLEMS TO BE SOLVED BY THE INVENTION

As described above, to execute an application corresponding to arbitrary content now being viewed, it is necessary to identify the content now being viewed. As a method, application of a technology called automatic content recognition (ACR) is assumed.

The ACR identifies the content now being viewed by comparing signature data (a characteristic amount) extracted from the content now being viewed by a predetermined extraction method, and signature data of content registered in a database in advance.

Note that, in the database of an ACR server that performs identification of the content using the ACR, information indicating the content, information indicating an application executed in cooperation with progress of the content, and the like are recorded, in addition to the signature data of content. These methods are supplied from a content provider such as a broadcast station, or an application provider.

Incidentally, management and operation of the ACR server is not limited to the broadcast station, entry of various business operators can be considered. As a result, emergence of a plurality of ACR servers is assumed. Even in this case, for the content provider or the application provider, it is desirable that the information of content and an application can be supplied through an interface common to the ACR servers.

The present disclosure has been made in view of the foregoing, and enables an interface with respect to a plurality of ACR servers used for identification of the content to become common when an application is executed in cooperation with progress of arbitrary content now being viewed.

### SOLUTIONS TO PROBLEMS

A transmission device according to a first aspect of the present disclosure includes: one or a plurality of content identification units including a database unit in which reference data in which signature data indicating a characteristic of content that is possibly viewed at a side of a reception device, the signature data being generated from the content, and a content identifier indicating the content of a generation source are at least described, and timeline data in which an application identifier indicating an application to be executed in cooperation with the content, and timeline information indicating execution timing of the application are at least described, are compiled, and a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device; and a timeline data generation unit configured to generate the timeline data, and to collectively supply the common timeline data to the one or the plurality of content identification units.

The transmission device according to the first aspect of the present disclosure further includes a user interface unit for controlling the timeline data generation unit.

The transmission device according to the first aspect of the present disclosure further includes a signature data extraction unit configured to extract the signature data from the content possibly viewed at the side of a reception device by an extraction method corresponding to each of the one or the plurality of identification servers.

The content identification unit further includes a reference data generation unit configured to generate the reference data using the signature data extracted by the signature data extraction unit.

The signature data extraction unit generates a fingerprint as the signature data.

A method of processing information of a transmission device according to the first aspect of present disclosure includes the steps of: by the transmission device, generating common timeline data for being collectively supplied to one or a plurality of content identification units, the content identification unit including a database unit in which reference data in which signature data indicating a characteristic of content that is possibly viewed at a side of a reception device, the signature data being generated from the content, and a content identifier indicating the content of a generation source are at least described, and the timeline data in which an application identifier indicating an application to be executed in cooperation with the content, and timeline information indicating execution timing of the application are at least described, are compiled, and a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device; and collectively supplying the common timeline data to the one or the plurality of content identification units.

A program according to the first aspect of present disclosure causes a computer to execute: one or a plurality of content identification units including a database unit in which reference data in which signature data indicating a characteristic of content that is possibly viewed at a side of a reception device, the signature data being generated from the content, and a content identifier indicating the content of a generation source are at least described, and timeline data in which an application identifier indicating an application to be executed in cooperation with the content, and timeline information indicating execution timing of the application are at least described, are compiled, and a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device; and a timeline data generation unit configured to generate the timeline data, and to collectively supply the common timeline data to the one or the plurality of content identification units.

In the first aspect of the present disclosure, a common timeline data for being collectively supplied to one or a plurality of content identification units is generated, and the common timeline data is collectively supplied to the one or the plurality of content identification units, the one or the plurality of content identification units including a database unit in which reference data in which signature data indicating a characteristic of content that is possibly viewed at a side of a reception device, the signature data being generated from the content, and a content identifier indicating the content of a generation source are at least described, and the timeline data in which an application identifier indicating an application to be executed in cooperation with the content, and timeline information indicating execution timing of the application are at least described, are compiled, and a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device.

A reception device according to a second aspect of the present disclosure includes: an extraction unit configured to extract, from played back content, signature data indicating a characteristic of the content; a query generation unit configured to generate a query including at least the signature data and to transmit the query to one or a plurality of content identification units included in a transmission device, and to receive a response returned from the content identification unit in response to the query; and an application execution unit configured to acquire an application corresponding to the content, and to execute the acquired application in cooperation with progress of the content, based on timeline data included in the received response, the timeline data being collectively and commonly supplied to the one or the plurality of content identification units.

The application execution unit acquires the application corresponding to the content, based on an application identifier described in the timeline data included in the received response.

The application execution unit acquires an application identifier of the application corresponding to the content, based on an event identifier described in the timeline data included in the received response, and acquires the application corresponding to the content, based on the acquired application identifier.

In the second aspect of the present disclosure, signature data indicating a characteristic of a content is extracted from the played back content, a query including at least the signature data is generated and is transmitted to one or a plurality of content identification units included in a transmission device, and a response returned from the content identification unit in response to the query is received. Further, an application corresponding to the content is acquired based on timeline data included in the received response, and collectively and commonly supplied to the one or the plurality of content identification units, and the acquired application is executed in cooperation with progress of the content.

In an application cooperation system made of a transmission device and a reception device of content according to a third aspect of the present disclosure, the transmission device including one or a plurality of content identification units including a database unit in which reference data in which signature data indicating a characteristic of content that is possibly viewed at a side of the reception device, the signature data being generated from the content, and a content identifier indicating the content of a generation source are at least described, and timeline data in which an application identifier indicating an application to be executed in cooperation with the content, and timeline information indicating execution timing of the application are at least described, are compiled, and a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device, and a timeline data generation unit configured to generate the timeline data, and to collectively supply the common timeline data to the one or the plurality of content identification units, and the reception device including an extraction unit configured to extract, from played back content, signature data indicating a characteristic of the content, a query generation unit configured to generate a query including at least the signature data and to transmit the query to one or a plurality of content identification units included in the transmission device, and to receive a response returned from the content identification unit in response to the query, and an application execution unit configured to acquire an application corresponding to the content, and to execute the acquired application in cooperation with progress of the content, based on timeline data included in the received response, the timeline data being collectively and commonly supplied to the one or the plurality of content identification units.

In an application cooperation system as the third aspect of the present disclosure, by a transmission device, a common timeline data for being collectively supplied to one or a plurality of content identification units is generated, and the common timeline data is collectively supplied to the one or the plurality of content identification units, the one or the plurality of content identification units including a database unit in which reference data in which signature data indicating a characteristic of content that is possibly viewed at a side of a reception device, the signature data being generated from the content, and a content identifier indicating the content of a generation source are at least described, and the timeline data in which an application identifier indicating an application to be executed in cooperation with the content, and timeline information indicating execution timing of the application are at least described, are compiled, and a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device. Further, by the reception device, signature data indicating a characteristic of a content is extracted from the played back content, a query including at least the signature data is generated and is transmitted to one or a plurality of content identification units included in the transmission device, and a response returned from the content identification unit in response to the query is received. Further, an application corresponding to the content is acquired based on timeline data included in the received response, and collectively and commonly supplied to the one or the plurality of content identification units, and the acquired application is executed in cooperation with progress of the content.

### EFFECTS OF THE INVENTION

According to the first aspect of the present disclosure, an interface with respect to a plurality of content identification units used for identification of content can be made common.

According to the second aspect of the present disclosure, an application can be executed in cooperation with progress of arbitrary content now being viewed.

According to the third aspect of the present disclosure, an interface with respect to a plurality of ACR servers used for discrimination of content can be made common when an application is executed in cooperation with progress of arbitrary content now being viewed.

### BRIEF DESCRIPTION OF DRAWINGS

Fig. 1 is a block diagram illustrating a configuration example of an application cooperation system that is an embodiment of the present disclosure.
Fig. 2 is a block diagram illustrating a configuration example of an ACR server.
Fig. 3 is a diagram illustrating a data structure of an event message.
Fig. 4 is a diagram illustrating a data structure of timeline data.
Fig. 5 is a diagram illustrating an association example between progress timing of content and an event.
Fig. 6 is a diagram illustrating a data structure of ACR reference data.
Fig. 7 is a diagram illustrating a data structure of an ACR query.
Figs. 8A and 8B are diagrams illustrating data structures of an ACR response.
Fig. 9 is a diagram illustrating a display example of an operator screen of a broadcasting device.
Fig. 10 is a flowchart for describing ACR database registration processing.
Fig. 11 is a flowchart for describing timeline data generation processing.
Fig. 12 is a flowchart for describing ACR reference data generation processing.
Fig. 13 is a flowchart for describing a series of operation by the application cooperation system.
Fig. 14 is a block diagram illustrating application acquisition processing corresponding to a modification of an application cooperation system.
Fig. 15 is a flowchart for describing application acquisition processing corresponding to a modification of an application cooperation system.
Fig. 16 is a block diagram illustrating a configuration example of a computer.

### MODE FOR CARRYING OUT THE INVENTION

Hereinafter, favorable embodiments (hereinafter, referred to embodiments) for implementing the present disclosure will be described in detail with reference to the drawings.

### [Configuration Example of Application Cooperation System]

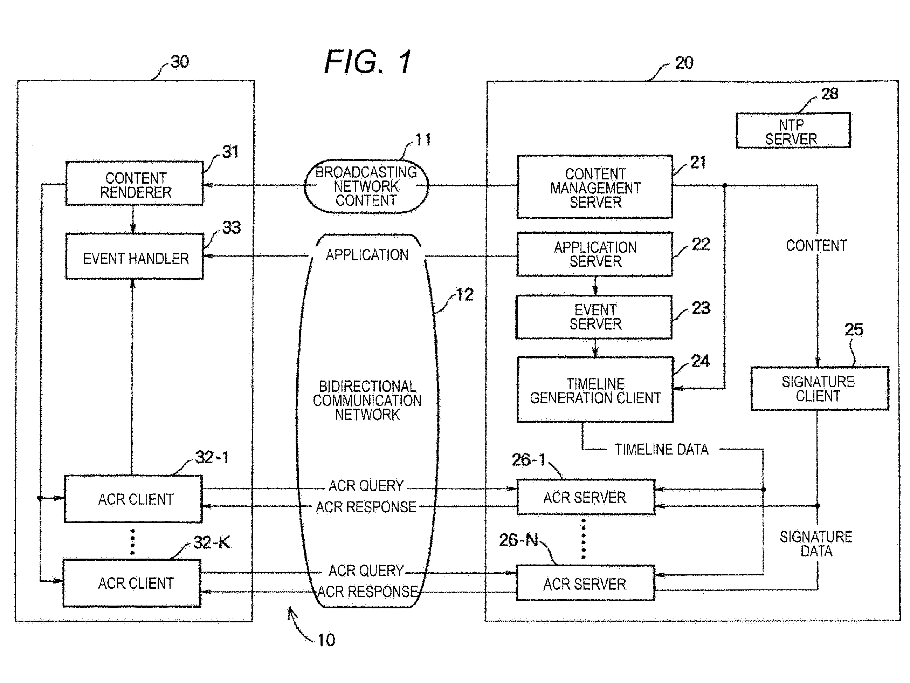

Fig. 1 illustrates a configuration example of an application cooperation system as an embodiment of the present disclosure.

This application cooperation system 10 identifies (discriminates), using ACR, content viewed by a user who uses a screen of a TV receiver as a monitor, and executes an application in cooperation with progress of the content.

Here, the content is not limited to a program now on the air, which is received by the TV receiver. For example, all kinds of AV content, such as a program recorded and played back by a video recorder, a video such as a movie played back from a package medium by a multimedia player, and a moving image downloaded through the Internet, are included. Further, a commercial message (hereinafter, referred to CM) inserted between programs or in the middle of a program is also included in the content.

The application cooperation system 10 is configured from a transmission device 20, and a plurality of reception devices 30 connected with the transmission device 20 through a broadcasting network 11 and a bidirectional communication network 12. The broadcasting network 11 indicates a TV broadcasting network, a CATV network, an IPTV network, and the like. The bidirectional communication network 12 indicates an IP communication network represented by the Internet.

The reception device 30 is arranged in a user house in a state of being built in a TV receiver or the like.

### [Description of Transmission Device 20]

The transmission device 20 is configured from a content management server 21, an application server 22, an event server 23, a timeline generation client 24, a signature client 25, a plurality of ACR servers 26-1 to 26-N, and an NTP server 28.

The content management server 21 broadcasts content such as a program or CM through the broadcasting network 11.

Further, the content management server 21 supplies content in a decoded state, which can be viewed at the reception side, to the timeline generation client 24 and the signature client 25. The content may be archived content or may be a live stream now being broadcasted.

The application server 22 generates and manages an application to be executed in cooperation with progress of the content, and notifies an application identifier (AppsUrl) for specifying an application in response to search from the event server 23 and supplies metadata used in the application to the event server 23. Further, the application server 22 supplies the application and the metadata used in the application through the bidirectional communication network 12 in response to a request from an event handler 33 of the reception device 30.

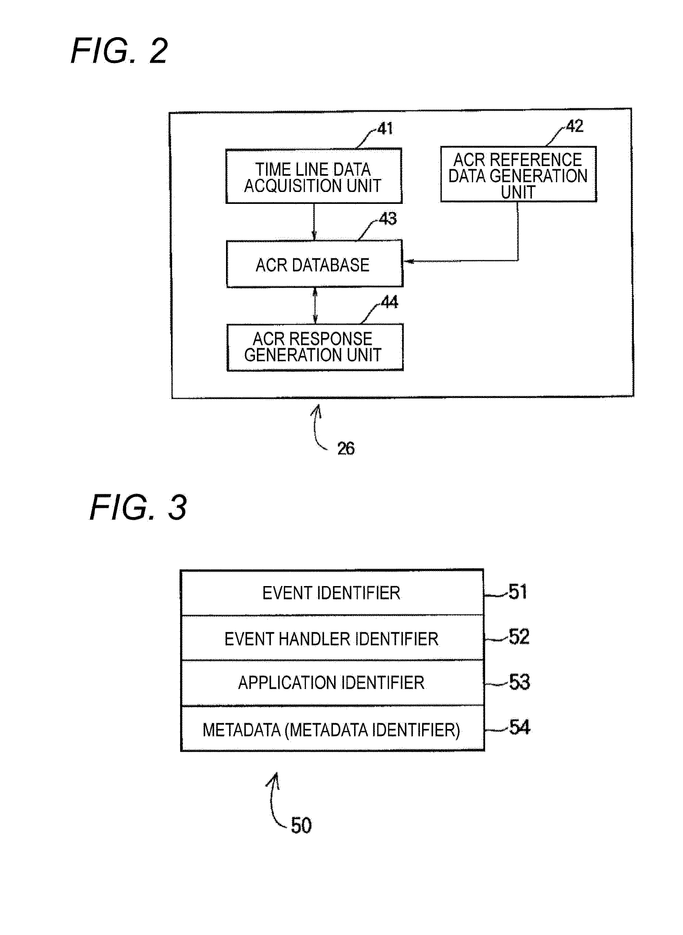

The event server 23 generates an event message related to processing (hereinafter, referred to as event) of executing the application in cooperation with progress of the content, and notifies the timeline generation client 24 of the event message. Details of the event message will be described below with reference to Fig. 3.

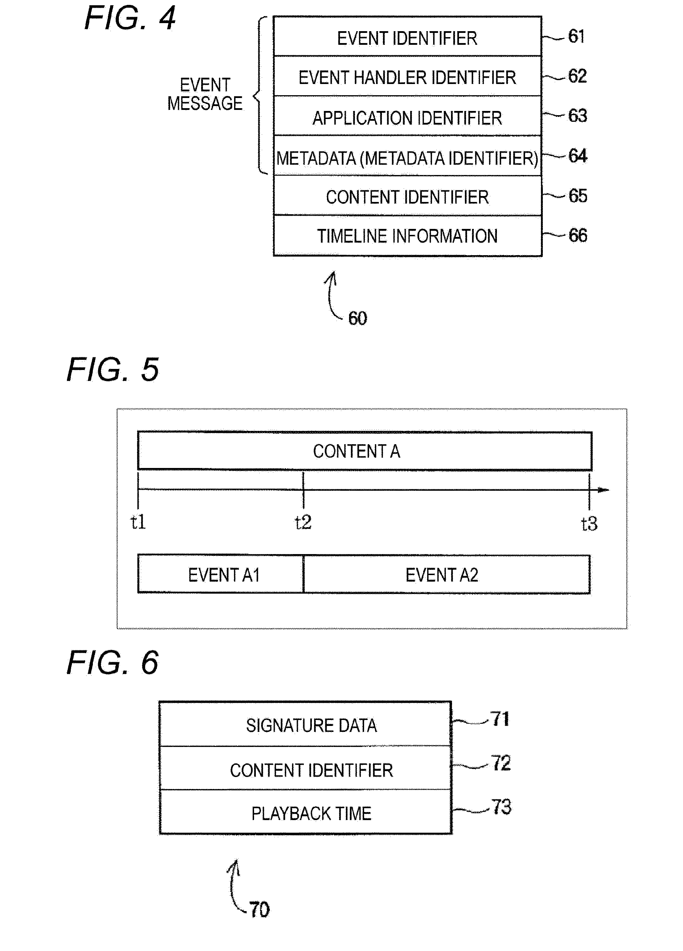

The timeline generation client 24 generates timeline data in which the event message is associated with progress timing of the content, and collectively supplies the common timeline data to the ACR servers 26-1 to 26-N. Details of the timeline data will be described below with reference to Fig. 5.

The signature client 25 extracts (generates) signature data from the content supplied from the content management server 21, by an extraction method corresponding to each of the ACR servers 26 at a predetermined sampling period, and supplies the signature data to the ACR servers 26-1 to 26-N together with a content identifier that indicates the content of an extraction (generation) source. Note that the signature client 25 may generate a fingerprint as the signature data.

With the fingerprint, even if a resolution, an aspect ratio, a bit rate, and an encoding format of the content are converted, the same signature data can be obtained before and after the conversion. Therefore, identification accuracy of content can be increased if the fingerprint is used as the signature data.

The ACR server 26-i (i = 1, ..., N) identifies (discriminates) the content viewed at the reception device 30 side in response to an ACR query transmitted from a corresponding ACR client 32-i of ACR client 32-1 to 32-N of the reception device 30. Further, the ACR server 26-i generates an ACR response including information of the application to be executed in cooperation with progress of the content and the like, and returns the ACR response to the ACR client 32-i. The ACR query and the ACR response will be described below.

The NTP server 28 supplies common time information to the content management server 21, the application server 22, the event server 23, the timeline generation client 24, the signature client 25, and the ACR servers 26-1 to 26-N, which configure the transmission device 30.

Note that the content management server 21, the application server 22, the event server 23, the timeline generation client 24, the signature client 25, the ACR servers 26-1 to 26-N, and the NTP server 28, which configure the transmission device 30, may be centrally arranged in one place, or may be arranged in a distributed manner. Further, these servers and clients may be appropriately combined.

### [Description of Reception Device 30]

The reception device 30 includes a content renderer 31, a plurality of ACR clients 32-1 to 32-K, and an event handler 33.

The content renderer 31 acquires and branches all pieces of content displayed on a screen of a TV receiver where the reception device 30 is built in, and supplies the content to the ACR client 32. That is, the content renderer 31 acquires and branches not only received content broadcasted from the content management server 21, but also content input through various input terminals (HDMI (registered trademark) terminal, and the like) of the TV receiver, and supplies the content to the ACR clients 32-1 to 32-N.

The ACR client 32-i (i = 1, ..., K (K ≤ N)) corresponds to the ACR server 26-i of the transmission device 20, and extracts the signature data from the content input from the content renderer 31, by an extraction method corresponding to the ACR server 26-i at a predetermined sampling period.

Further, the ACR client 32-i generates the ACR query in which the extracted signature data and user profile data, and transmits the ACR query to the corresponding ACR server 26-i of the ACR servers 26-1 to 26-N of the transmission device 20 through the bidirectional communication network 12.

The user profile data stored in the ACR query can include items, such as demographic attributes of the user (the age, gender, occupation, academic background, residential area, mail address, hobby, taste, language, family size, and viewing tendency of content), a specification of the reception device 30 (a type of available CODEC and the like), a congestion state of the bidirectional communication network 12, natural environment information (weather, temperature, humidity, and the like).

Further, the ACR client 32-i receives and holds the ACR response returned from the ACR server 26-i in response to the transmitted ACR query. Further, the ACR client 32-i analyzes the held ACR response, and notifies the event handler 33 of an analysis result. Note that the timeline data included in the ACR response is commonly supplied from the timeline generation client 24 to all of the ACR servers 26, and thus analysis processing of the ACR response and the timeline data in the respective ACR clients 32 can be made common.

The event handler 33 acquires the application corresponding to the content now being viewed from the application server 22 through the bidirectional communication network 12 based on the analysis result of the ACR response, and executes the application. Further, the event handler 33 acquires the metadata to be processed in the application now being executed from the ACR client 32 or the application server 22.

### [Detailed Configuration Example of ACR Server 26]

Fig. 2 illustrates a detailed configuration of the ACR server 26.

The ACR server 26 is configured from a timeline data acquisition unit 41, an ACR reference data generation unit 42, an ACR database 43, and an ACR response generation unit 44.

The timeline data acquisition unit 41 registers the timeline data which indicates correspondence between the progress timing of the content and the event, and which is supplied from the timeline generation client 24, in the ACR database 43.

The ACR reference data generation unit 42 generates ACR reference data by associating the signature data supplied from the signature client 25 with the content identifier that indicates the content of the extraction (generation) source of the signature data and a playback time that indicates the extraction (generation) timing, and registers the ACR reference data in the ACR database 43. A data structure of the ACR reference data will be described below with reference to Fig. 6.

The ACR database 43 creates and stores indexes of the timeline data from the timeline data acquisition unit 41 and the ACR reference data from the ACR reference data generation unit 42. Note that the ACR database 43 may be developed on a cloud.

The ACR response generation unit 44 identifies the content of the extraction source of the signature data included in the ACR query transmitted from the ACR client 32, and specifies the timeline data associated with the content, by reference to the ACR database 43. Further, the ACR response generation unit 44 generates an ACR response including the content identifier of the identification result, the timeline data corresponding to the content identifier, and the like. Note that, in generating the ACR response, the metadata and the like in the timeline data, which is to be included in the ACR response, may be matched and filtered based on the user profile data included in the ACR query, and data suitable for a user of the reception device 30 may be transmitted.

### [Structures of Various Types of Data]

Next, structures of the above-described various types of data will be described.

### [Data Structure of Event Message]

Fig. 3 illustrates a data structure of the event message generated in the event server 23 of the transmission device 20.

The event message 50 is generated for each event, and in which an event identifier 51, an event handler identifier 52, an application identifier 53, and metadata 54 are stored.

The event identifier 51 is discrimination information of each event. The event handler identifier 52 is information that indicates the event handler 33 of the reception device 30, which processes the event. The application identifier 53 is information for discriminating an application executed for realizing the event. The application identifier 53 is written by a uniform resource locator (URL), for example, and also indicates an acquisition destination (application server 22) of the application. The metadata 54 is data processed by the application indicated by the application identifier 53. Note that a metadata identifier written by a URL, and which discriminates the metadata and indicates the acquisition destination of the metadata may be stored, in place of the metadata 54.

### [Data Structure of Timeline Data]

Fig. 4 illustrates a data structure of the timeline data generated in the timeline generation client 24 of the transmission device 20.

Timeline data 60 is data obtained such that a content identifier 65 and timeline information 66 are added to an event identifier 61, an event handler identifier 62, an application identifier 63, and metadata 64 cited from the event message 50. The content identifier 65 is information that indicates content associated with an event. The timeline information 66 is information that indicates progress timing of the content associated with the event.

For example, the following is a specific description of when it is associated such that, as illustrated in Fig. 5, an event A1 is executed from progress timing t1 to t2 of content A, and an event A2 is executed from progress timing t2 to t3.

```
 <timeLine>//timeline data
  <mediaId>MediaID1</mediaId>//content identifier
  <event> //description corresponding to event A1
 <eventHandler>EventHanlderID1Url</eventHandler>//event
 handler identifier
 <appsUrl>Apps1Url</appsUrl>//application identifier
 <startTime>t1</startTime>//timeline information
 <endTime>t2</endTime>//timeline information
  </event>
  <event> //description corresponding to event A2
 <eventHandler>EventHanlderID1Url</eventHandler>//event
 handler identifier
 <appsUrl>Apps1Url</appsUrl>//application identifier
 <metadataUrl>Metadata1Url</metadataUrl>//metadata
 identifier
 <startTime>T2</startTime>//timeline information
 <endTime>T3</endTime>//timeline information
  </event>
 </timeLine>
```

### [Data Structure of ACR Reference Data]

Next, Fig. 6 illustrates a data structure of the ACR reference data generated by the ACR reference data generation unit 42 of the ACR server 26.

In the ACR reference data 70, a content identifier 72 and a playback time 73 is associated with signature data 71 supplied from the signature client 25.

The signature data 71 is supplied from the signature client 25. The content identifier 72 is information for discriminating the content of the extraction source of the signature data 71. The playback time 73 indicates the processing timing of the content of when the signature data 71 is extracted from the content indicated by the content identifier 72, and is expressed by an elapsed time from a head of the content.

### [Data Structure of ACR Query]

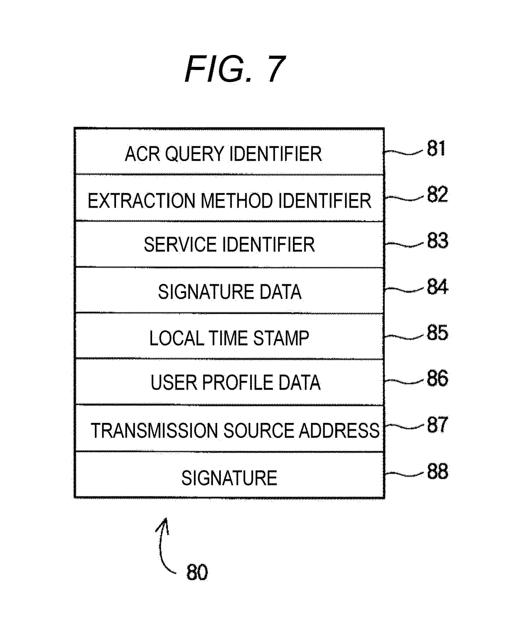

Fig. 7 illustrates a data structure of the ACR query transmitted from the ACR client 32 to the ACR server 26.

The ACR query 80 includes an ACR query identifier 81, an extraction method identifier 82, a service identifier 83, a signature data 84, a local time stamp 85, a user profile data 86, a transmission source address 87, and a signature 88.

The ACR query identifier 81 is information for uniquely specifying the ACR query 80. The extraction method identifier 82 is information for specifying the extraction method used when the signature data 84 is extracted. The service identifier 83 is information for selecting the ACR server 26 to which the ACR query 80 is transmitted and from which the ACR response is obtained from among the plurality of ACR servers 26-1 to 26-N.

The signature data 84 is extracted from the content in the ACR client 32. The local time stamp 85 indicates timing at which the signature data 84 is extracted from the content, and is expressed by a time indicated by a local system clock of the reception device 30.

The user profile data 86 is information that includes the demographic attributes of the user. The transmission source address 87 is an address of the ACR client 32 that transmits the ACR query 80, in the bidirectional communication network 12, and is used as information that indicates a return destination of the ACR response generated in the ACR server 26 in response to the ACR query 80. The signature 88 suppresses falsification of the ACR query 80. Note that the entire ACR query 80 may be encrypted and transmitted.

### [Data Structure of ACR Response]

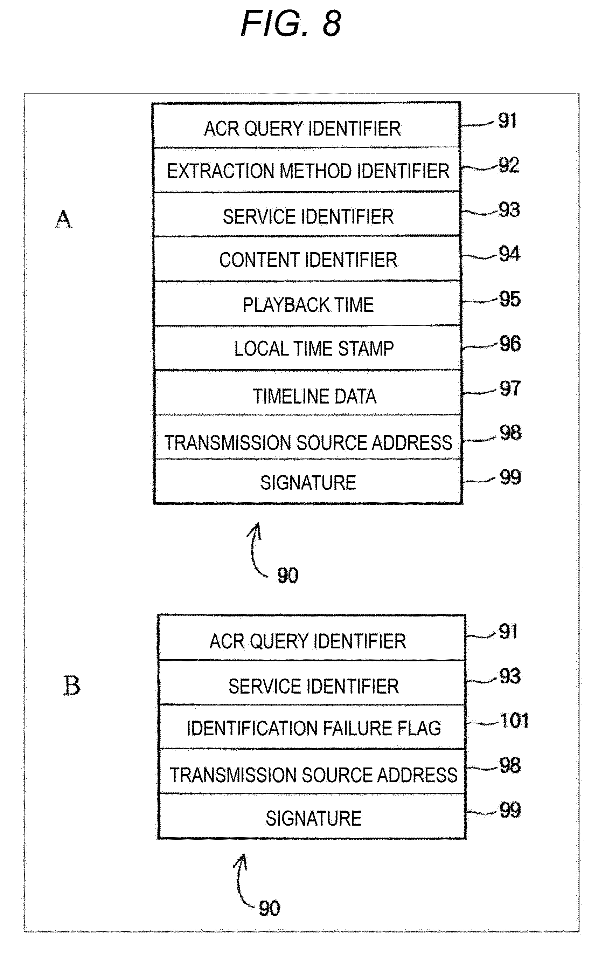

Figs. 8A and 8B illustrates data structures of the ACR response returned from the ACR server 26 to the ACR client 32.

Note that Fig. 8A is a data structure of the ACR response of when the content of the extraction source of the signature data 84 included in the ACR query 80 has been able to be identified, that is, when the content now being viewed has been able to be identified in the reception device 30. Fig. 8B is a data structure of the ACR response of when the content has not been able to be identified.

An ACR response 90 (Fig. 8A) of when the content now being viewed has been able to be identified in the reception device 30 includes an ACR query identifier 91, and extraction method identifier 92, a service identifier 93, a content identifier 94, a playback time 95, a local time stamp 96, a timeline data 97, a transmission source address 98, and a signature 99.

Meanwhile, an ACR response 90 (Fig. 8B) of when the content now being viewed has not been able to be identified in the reception device 30 includes the ACR query identifier 91, the service identifier 93, a transmission source address 98, a signature 99, and an identification failure flag 101.

The ACR query identifier 91, the extraction method identifier 92, the service identifier 93, and the local time stamp 96 are used for specifying the ACR query 80 that is a trigger with which the ACR response 90 is generated, and are described citing the ACR query identifier 81, the extraction method identifier 82, the service identifier 83, and the local time stamp 85 of the corresponding ACR query 80.

The content identifier 94 and the playback time 95 indicate an identification result, and are described citing the content identifier 72 and the playback time 73 of the corresponding ACR reference data 70.

The timeline data 97 is associated with the identified content, and includes items as illustrated in Fig. 4.

The transmission source address 98 is an address of the ACR server 26 that transmits the ACR response 90, on the bidirectional communication network 12. The signature 99 suppresses falsification of the ACR response 90. Note that the falsification may be prevented by encrypting and transmitting the entire ACR response 90.

The identification failure flag 101 indicates a flag that indicates the content of the extraction source of the signature data 84 included in the ACR query 80 from the ACR client 32 has not been able to be identified in the ACR server 26, that is, the content now being viewed has not been able to be identified in the reception device 30.

### [Description of Operator Screen]

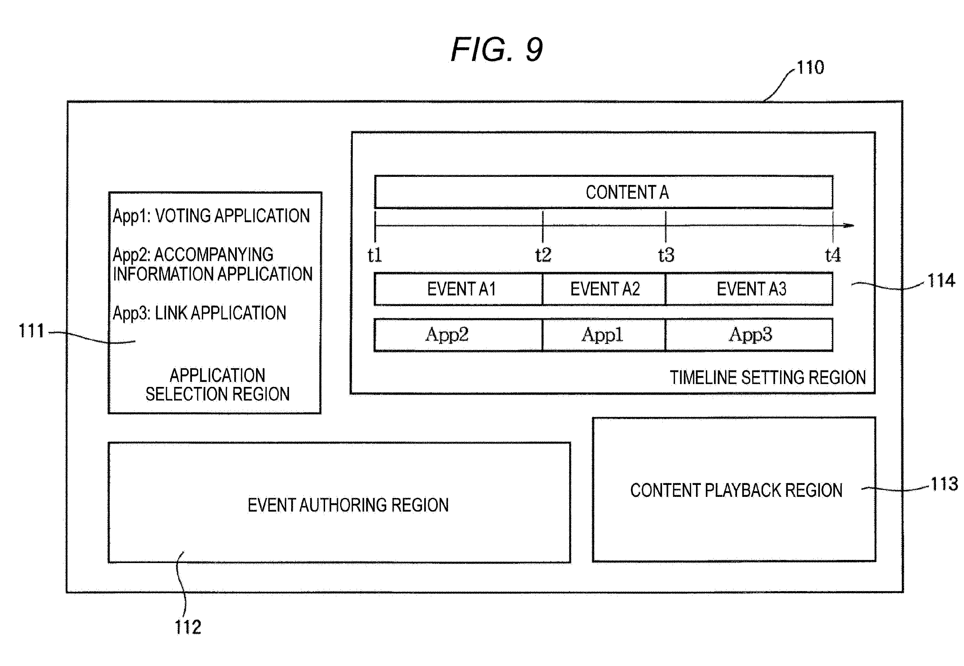

Fig. 9 illustrates a display example of an operator screen 110 used by an operator of the broadcasting device 20 for controlling the event server 23 and the timeline generation client 24. Assume that, in a stage where the operator screen 110 is displayed, the content that associates an event has already been selected.

On the operator screen 110, an application selection region 111, an event authoring region 112, a content playback region 113, and a timeline setting region 114 are provided.

In the application selection region 111, an application to be executed in each event can be selected. In the event authoring region 112, information displayed by the application executed in each event can be authored. In the content playback region 113, content and display of an application in cooperation with the content can be confirmed. In the timeline setting region 114, an event can be associated with progress timing of content. Further, in the timeline setting region 114, an application associated with an event can be confirmed.

### [Operation by Application Cooperation System 10]

Next, an operation of the application cooperation system 10 will be described.

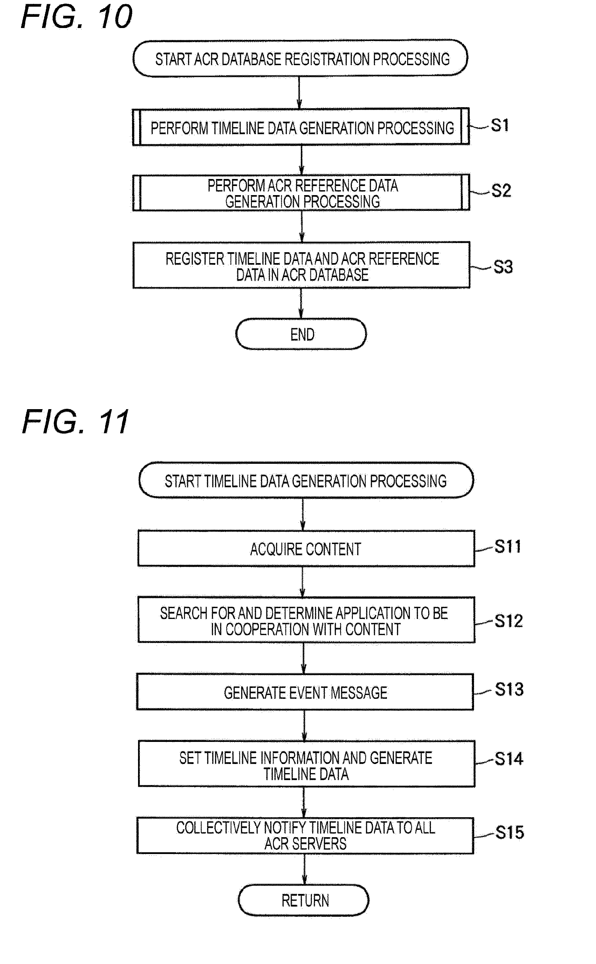

Fig. 10 is a flowchart for describing processing up to generation of the ACR database 43 of each ACR server 26 (hereinafter, referred to as ACR database registration processing).

In step S1, timeline data generation processing of generating the timeline data is performed. Fig. 11 is a flowchart for describing the timeline data generation processing in detail.

In step S11, the timeline generation client 24 acquires the content from the content management server 21. In step S12, the event server 23 searches the application server 22 for the application to be in cooperation with the content and determines the application, and acquires the application identifier and the like from the application server 22. In step S13, the event server 23 generates the event message including the application identifier and the like, and outputs the event message to the timeline generation client 24.

In step S14, the timeline generation client 24 generates the timeline data in which the event message is associated with the progress timing of the content. In step S15, the timeline generation client 24 collectively notifies the ACR servers 26-1 to 26-N of the generated timeline data. As described above, the interface (timeline data) with respect to the ACR server 26 is made common. Therefore, even if the number of the ACR servers 26 is increased, an increase in a load can be suppressed. The timeline data generation processing is herewith completed, and the processing is returned to step S2 of Fig. 10.

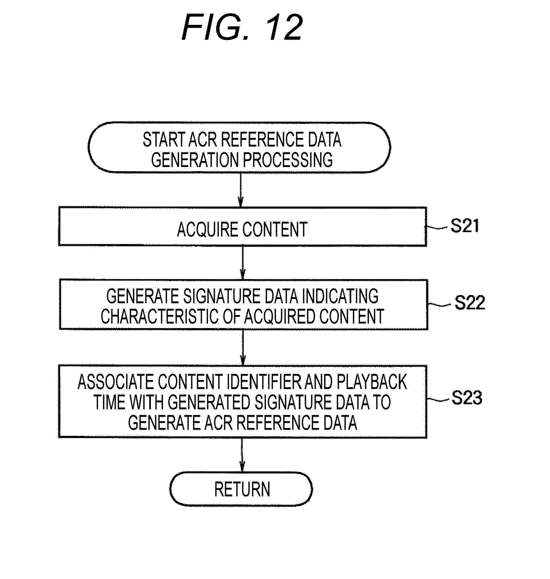

In step S2, ACR reference data generation processing of generating the ACR reference data is performed. Fig. 12 is a flowchart for describing the ACR reference data generation processing in detail.

In step S21, the signature client 25 acquires the content from the content management server 21. In step S22, the signature client 25 extracts the signature data from the acquired content by an extraction method corresponding to each ACR server 26, at a predetermined sampling period, and supplies the signature data to each ACR server 26 together with the content identifier that indicates the content of the extraction source.

In step S23, the ACR reference data generation unit 42 of each ACR server 26 associates the signature data supplied from the signature client 25 with the content identifier that indicates the content of the extraction (generation) source of the signature data, and the playback time that indicates the extraction (generation) timing to generate the ACR reference data. The ACR reference data generation processing is herewith completed, and the processing is returned to step S3 of Fig. 10.

Note that the timeline data generation processing of step S1 and the ACR reference data generation processing of step S2 described above can be performed in parallel.

In step S3, the ACR database 43 creates and stores indexes of the timeline data generated in step S1 and the ACR reference data generated in step S2. The ACR database registration processing is herewith completed.

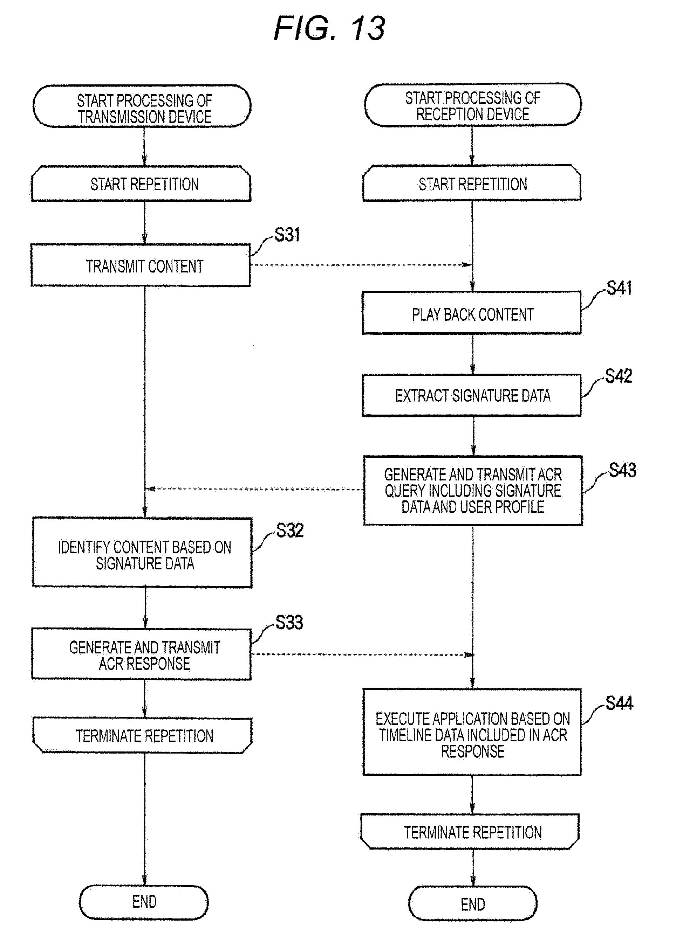

Fig. 13 is a flowchart for describing a series of operation of the application cooperation system 10 as a whole.

Assume that the transmission device 20 has already executed the above-described ACR database registration processing, and the ACR database 43 of each ACR server 26 has been generated.

In this series of operation, the transmission device 20 repeats steps S31 to S33 described below. Meanwhile, the reception device 30 repeats steps S41 to S44 described below.

In step S31, the transmission device 20 starts transmission of the content from the content management server 21 through the broadcasting network 11.

Meanwhile, in step S41, the reception device 30 starts playback of the content. Note that the content may not be transmitted from the transmission device 20.

In step S42, the content renderer 31 acquires and branches the content now being played back (that is, the user is viewing), and outputs the content to the ACR client 32-i. In step S43, the ACR client 32-i extracts, at a predetermined sampling period, the signature data from the content now being viewed input from the content renderer 31. Further, the ACR client 32-i generates the ACR query 80 including the signature data and the user profile data, and transmits the ACR query 80 to the corresponding ACR server 26-i, every time extracting the signature data. Note that one or a plurality of the ACR clients 32 generates and transmits the ACR query.

In the ACR server 26-i that has received the ACR query 80 from the ACR client 32-i, in step S32, the ACR response generation unit 44 refers to the ACR database 43, and identifies the content corresponding to the signature data 84 included in the received ACR query 80.

In step S33, the ACR response generation unit 44 generates the ACR response 90 according to the identification result of the content. At this time, the ACR response generation unit 44 may perform matching and filtering the metadata 64 in the timeline data 97 to be included in the ACR response 90, based on the user profile data 86 included in the ACR query 80. Further, the ACR response generation unit 44 returns the generated ACR response 90 to the corresponding ACR client 32-i.

In step S44, the ACR client 32-i that has received the ACR response 90 from the ACR server 26-i analyzes the timeline data 97 included in the ACR response 90, and notifies the event handler 33 indicated by the event handler identifier 62 of the application identifier 63 described in the timeline data 97. The event handler 33 accesses the application server 22 through the bidirectional communication network 12, and acquires and executes the application corresponding to the notified application identifier 63.

Note that, when having already acquired the application, the event handler 33 omits the processing of acquisition, and executes the already acquired application. Further, when the application has been already executed, the application now being executed acquires the metadata 64 of the timeline data 97 of the ACR response 90 from the ACR client 32-i, and uses the metadata 64. Further, when the metadata identifier is described instead of the metadata 64, the executed application acquires the metadata from the application server 22 through the bidirectional communication network 12 based on the metadata identifier, and uses the metadata.

The processing of steps S31 to S33 and the processing of steps S41 to S44 described above are repeatedly executed while the content is being viewed at the reception device 30 side. Accordingly, the operation of the application in cooperation with the progress timing of the content now being viewed becomes possible.

### [Modification]

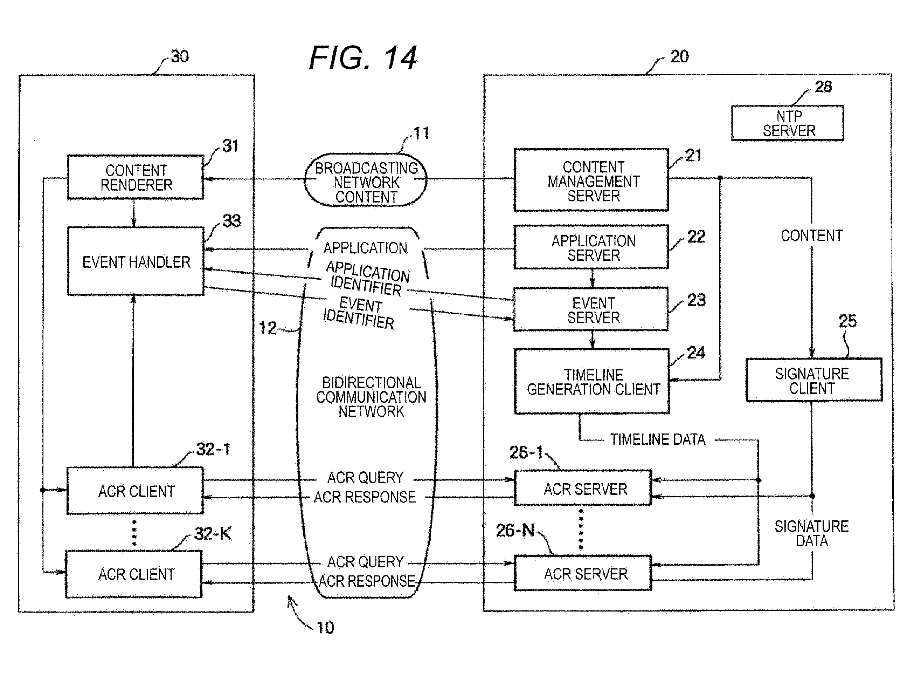

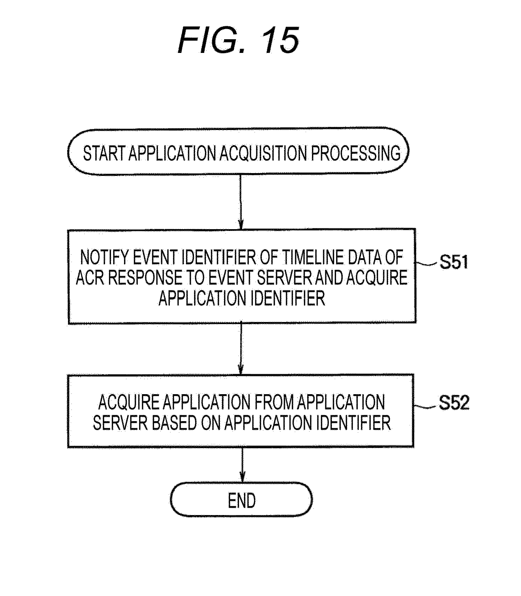

Next, a modification of a series of operation of an application cooperation system 10 will be described with reference to Figs. 14 and 15.

Fig. 14 illustrates a configuration example of the application cooperation system 10 corresponding to the modification, and is a diagram changed from Fig. 1 such that an arrow indicating that an event identifier is transmitted from an event handler 33 to an event server 23, and an arrow indicating that an application identifier is transmitted from the event server 23 to the event handler 33 are added to Fig. 1.

In the modification of the series of operation, processing until the event handler 33 acquires and executes an application (hereinafter, referred to as application acquisition processing) after an ACR client 26-i of a reception device 30 receives an ACR response 90 is different from the above description.

Fig. 15 is a flowchart for describing the application acquisition processing in the modification.

In step S51, the ACR client 32-i of the reception device 30, which has received the ACR response 90 returned from an ACR server 26-i of a transmission device 20 analyzes timeline data 97 included in the ACR response 90, and notifies the event handler 33 indicated by an event handler identifier 62 of an event identifier 61 described in the timeline data 97. The event handler 33 accesses the event server 23 through a bidirectional communication network 12, and notifies the event server 23 of the event identifier 61, thereby to obtain corresponding application identifier 63.

In step S52, the event handler 33 accesses an application server 22 through the bidirectional communication network 12, and acquires and executes the application corresponding to the notified application identifier 63. Description of the application acquisition processing in the modification is herewith completed.

Incidentally, the transmission device 20 and the reception device 30 that execute the above-described series of processing can be realized by software, which is executed by a computer, other than these devices being configured from hardware. The computer includes a computer incorporated in dedicated hardware, a general-purpose personal computer capable of executing various functions by being installed various programs, and the like.

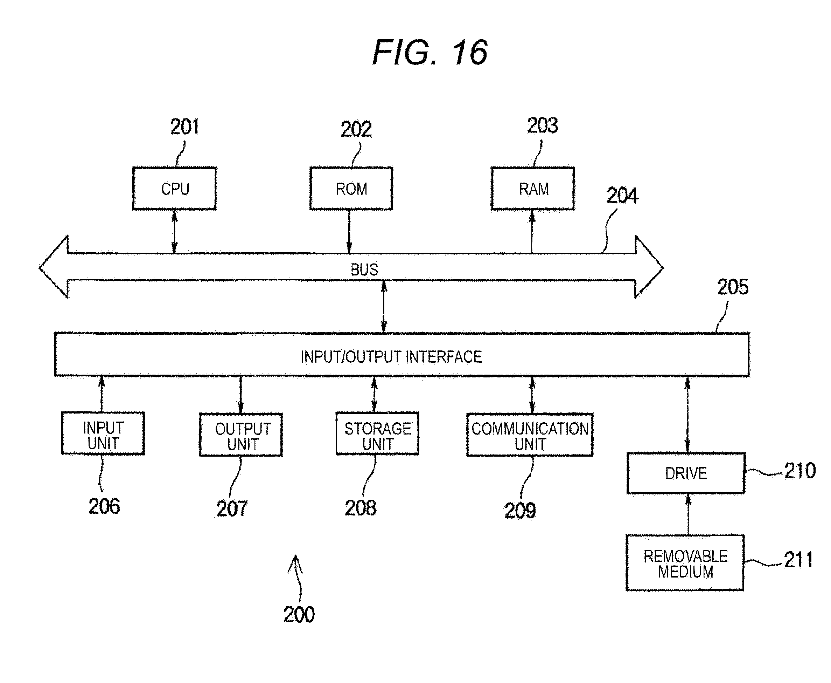

Fig. 16 is a block diagram illustrating a configuration example of hardware of the above-described computer.

In a computer 200, a central processing unit (CPU) 201, a read only memory (ROM) 202, and a random access memory (RAM) 203 are mutually connected by a bus 204.

An input/output interface 205 is connected to the bus 204. An input unit 206, an output unit 207, a storage unit 208, a communication unit 209, and a drive 210 are connected to the input/output interface 205.

The input unit 206 is made of a key board, a mouse, a microphone, and the like. The output unit 207 is made of a display, a speaker, and the like. The storage unit 208 is made of a hard disk, a non-volatile memory, and the like. The communication unit 209 is made of a network interface, and the like. The drive 210 drives a removable medium 211 such as a magnetic disk, an optical disk, a magneto-optical disk, or a semiconductor memory.

In the computer 200 configured as described above, the CPU 201 loads the program stored in the storage unit 208 through the input/output interface 205 and the bus 204 to the RAM 203, and executes the program, thereby to perform the above-described series of processing.

The program executed by the computer 200 (CPU 201) can be recorded on the removable medium 211 as a package medium and can be provided. Further, the program can be provided through a wired or wireless transmission medium, such as local area network, the Internet or digital satellite broadcasting.

In the computer 100, the program can be installed to the storage unit 108 through the input/output interface 105 by mounting the removable medium 211 to the drive 210. Further, the program can be received by the communication unit 109 and installed to the storage unit 108 through a wired or wireless transmission medium. Alternatively, the program can be installed in the ROM 102 or the storage unit 108 in advance.

Note that the program executed by the computer 100 may be a program that is processed in time series along the order described in this specification, or may be a program that is processed in parallel or at necessary timing such as being called.

Note that an embodiment of the present disclosure is not limited to the above-described embodiments, and various changes can be made without departing from the gist of the present disclosure.

### REFERENCE SIGNS LIST

- 10: Application cooperation system
- 11: Broadcasting network
- 12: Bidirectional communication network
- 20: Transmission device
- 21: Content management server
- 22: Application server
- 23: Event server
- 24: Timeline generation client
- 25: Signature client
- 26: ACR server
- 28: NTP server
- 30: Reception device
- 31: Content renderer
- 32: ACR client
- 33: Event handler
- 41: Timeline data acquisition unit
- 42: ACR reference data generation unit
- 43: ACR database
- 44: ACR response generation unit
- 50: Event message
- 60: Timeline data
- 70: ACR reference data
- 80: ACR query
- 90: ACR response
- 110: Operator screen
- 200: Computer
- 201: CPU

## Claims

1. A transmission device comprising:
one or a plurality of content identification units including
a database unit in which reference data in which signature data indicating a characteristic of content that is possibly viewed at a side of a reception device, the signature data being generated from the content, and a content identifier indicating the content of a generation source are at least described, and timeline data in which an application identifier indicating an application to be executed in cooperation with the content, and timeline information indicating execution timing of the application are at least described, are compiled, and
a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device; and
a timeline data generation unit configured to generate the timeline data, and to collectively supply the common timeline data to the one or the plurality of content identification units.

2. The transmission device according to claim 1, further comprising
a user interface unit for controlling the timeline data generation unit.

3. The transmission device according to claim 2, further comprising
a signature data extraction unit configured to extract the signature data from the content possibly viewed at the side of a reception device by an extraction method corresponding to each of the one or the plurality of identification servers.

4. The transmission device according to claim 3, wherein the content identification unit further includes a reference data generation unit configured to generate the reference data using the signature data extracted by the signature data extraction unit.

5. The transmission device according to claim 3, wherein the signature data extraction unit generates a fingerprint as the signature data.

6. A method of processing information of a transmission device, the method comprising the steps of:
by the transmission device,
generating common timeline data for being collectively supplied to one or a plurality of content identification units, the content identification unit including
a database unit in which reference data in which signature data indicating a characteristic of content that is possibly viewed at a side of a reception device, the signature data being generated from the content, and a content identifier indicating the content of a generation source are at least described, and the timeline data in which an application identifier indicating an application to be executed in cooperation with the content, and timeline information indicating execution timing of the application are at least described, are compiled, and
a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device; and
collectively supplying the common timeline data to the one or the plurality of content identification units.

7. A program for causing a computer to execute:
one or a plurality of content identification units including
a database unit in which reference data in which signature data indicating a characteristic of content that is possibly viewed at a side of a reception device, the signature data being generated from the content, and a content identifier indicating the content of a generation source are at least described, and timeline data in which an application identifier indicating an application to be executed in cooperation with the content, and timeline information indicating execution timing of the application are at least described, are compiled, and
a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device; and
a timeline data generation unit configured to generate the timeline data, and to collectively supply the common timeline data to the one or the plurality of content identification units.

8. A reception device comprising:
an extraction unit configured to extract, from played back content, signature data indicating a characteristic of the content;
a query generation unit configured to generate a query including at least the signature data and to transmit the query to one or a plurality of content identification units included in a transmission device, and to receive a response returned from the content identification unit in response to the query; and
an application execution unit configured to acquire an application corresponding to the content, and to execute the acquired application in cooperation with progress of the content, based on timeline data included in the received response, the timeline data being collectively and commonly supplied to the one or the plurality of content identification units.

9. The reception device according to claim 8, wherein the application execution unit acquires the application corresponding to the content, based on an application identifier described in the timeline data included in the received response.

10. The reception device according to claim 8, wherein the application execution unit acquires an application identifier of the application corresponding to the content, based on an event identifier described in the timeline data included in the received response, and acquires the application corresponding to the content, based on the acquired application identifier.

11. An application cooperation system made of a transmission device and a reception device of content,
the transmission device including
one or a plurality of content identification units including
a database unit in which reference data in which signature data indicating a characteristic of content that is possibly viewed at a side of the reception device, the signature data being generated from the content, and a content identifier indicating the content of a generation source are at least described, and timeline data in which an application identifier indicating an application to be executed in cooperation with the content, and timeline information indicating execution timing of the application are at least described, are compiled, and
a response generation unit configured to identify, by reference to the database unit, content of an extraction source of signature data included in a query transmitted from the reception device, and to generate a response including the timeline data in which a content identifier indicating the identified content, and the application identifier indicating an application to be executed in cooperation with progress of the identified content are described, and to return the response to the reception device, and
a timeline data generation unit configured to generate the timeline data, and to collectively supply the common timeline data to the one or the plurality of content identification units, and
the reception device including
an extraction unit configured to extract, from played back content, signature data indicating a characteristic of the content,
a query generation unit configured to generate a query including at least the signature data and to transmit the query to one or a plurality of content identification units included in the transmission device, and to receive a response returned from the content identification unit in response to the query, and
an application execution unit configured to acquire an application corresponding to the content, and to execute the acquired application in cooperation with progress of the content, based on timeline data included in the received response, the timeline data being collectively and commonly supplied to the one or the plurality of content identification units.
